# EUROPÄISCHE PATENTSCHRIFT

(11) **EP 0 489 329 B1**
(45) Veröffentlichungstag und Bekanntmachung des Hinweises auf die Patenterteilung: **25.01.1995**
(21) Anmeldenummer: 91120093.9
(22) Anmeldetag: 26.11.1991
(51) Int. Cl.: B60S 1/52

(54) **Waschvorrichtung für die Lichtscheibe einer Leuchte oder eines Scheinwerfers**
Washing device for the front glass of a lamp or a headlamp
Dispositif de lavage pour le verre frontal d'une lampe ou d'un phare

(30) Priorität: 01.12.1990 DE 9017068 U
(43) Veröffentlichungstag der Anmeldung: 10.06.1992
(73) Patentinhaber: Hella KG Hueck & Co., 59552 Lippstadt (DE)
(72) Erfinder: Thiele, Klaus, W-4780 Lippstadt (DE)

(56) Entgegenhaltungen:
- DE-A- 2 503 256
- DE-A- 3 728 508

## Beschreibung

Die Erfindung bezieht sich auf eine Waschvorrichtung für die Lichtscheibe einer Leuchte oder eines Scheinwerfers mit den Merkmalen nach dem Oberbegriff des Anspruchs 1.

Eine solche Waschvorrichtung für die Lichtscheibe einer Leuchte oder eines Scheinwerfers ist aus der DE-A-25 03 256 bekannt. Das Trägerelement der Düse ist aus hartem Kunststoff hergestellt und ist mit seinem Außenflansch unter Zwischenschaltung einer Unterlegscheibe an den Randbereich der Karosserieöffnung anlegbar, wobei an das Trägerelement angeformte Rastfedern den Randbereich der Karosserieöffnung selbsttätig hintergreifen. Diese Verbindung ist leicht und einfach herstellbar, jedoch kann sie nur von der Fahrzeuginnenseite her gelöst werden. Der Düsenhalter ist einstückig mit dem Trägerelement ausgeführt und der freie Endabschnitt des Trägerelements weist eine umlaufende Ringnut auf, in welche das topfförmige Abdeckteil selbstrastend eingreift. Zur Herstellung der Ringnut ist ein zusätzliches verstellbares Werkzeugteil notwendig. Das topfförmige Abdeckteil ist mit seinem äußeren umlaufenden Rand an die Karosseriewandung anlegbar. Dabei können so große Verspannungen zwischen dem Abdeckteil und dem Trägerelement entstehen, daß sich das Abdeckteil ungewollt von dem Trägerteil löst und eine auf das Abdeckteil aufgebrachte Lackschicht reißt oder abblättert.

Dieses Dokument bildet den Oberbegriff des Anspruchs 1.

Bei einer aus der DE-A 37 28 508 bekannten Waschvorrichtung ist der Düsenhalter kugelförmig ausgeführt, am freien Endabschnitt des rohrförmigen Trägerelements in die Durchgangsöffnung eingeschoben und in der von der Innenseite der Durchgangsöffnung gebildeten Gelenkpfanne verstellbar, um die Düse einjustieren zu können. Nach dem Einjustieren der Düse verstellt sich der kugelförmige Düsenhalter nicht selbsttätig, da zwischen ihm und der Gelenkpfanne des Trägerelements Reibung besteht. Der Festsitz des Abdeckteils und des Düsenhalters an dem Trägerelement ist jedoch erst dann gegeben, wenn zwischen der Innenseite der Bodenöffnung des Abdeckteils und der Mantelfläche des die Gelenkpfanne bildenden Endabschnitts des rohrförmigen Trägerelements eine kraftschlüssige Verbindung (Reibschluß) besteht und das Abdeckteil mit einem Abschnitt der Innenseite seiner Bodenöffnung einen Teil der Gelenkpfanne bildet. Aus diesen Gründen ist das Abdeckteil nur sehr schwergängig auf das Trägerelement aufsetzbar und vor dem Montieren des Trägerelements an die Karosseriewandung auf das Trägerelement aufzusetzen, damit sich die Düse nach ihrem Einjustieren nicht mehr verstellt. Der Endabschnitt des Trägerelements weist wegen der in ihn eingebrachten Gelenkpfanne einen größeren Außendurchmesser auf, als der zwischen dem Endabschnitt und dem Außenflansch verlaufende Abschnitt des rohrförmigen Trägerelements. Deshalb sind für die Entformung dieses Abschnitts verstellbare Werkzeugteile notwendig. Damit zwischen der gesamten Mantelfläche des Endabschnitts des Trägerelements und der Innenseite der Bodenöffnung des Abdeckteils eine sehr feste, kraftschlüssige Verbindung besteht, ist die Bodenöffnung hülsenförmig ausgeführt. Hierbei erstreckt sich die Hülse zum Außenflansch hin und liegt mit ihrer in Aufsetzrichtung des Abdeckteils weisenden Stirnfläche an dem Außenflansch an. Bei einer solchen Verbindung zwischen dem Abdeckteil und dem Trägerelement weist zwar der an der Karosserieöffnung festsetzbare Außenflansch eine genau vorherbestimmbare Lage zu dem äußeren umlaufenden Randbereich des Abdeckteils auf, jedoch ist sowohl zwischen dem umlaufenden Rand des Abdeckteils als auch zwischen dem Außenflansch des Trägerelements und der Karosseriewandung ein aus elastischem Material hergestelltes plattenförmiges Teil eingesetzt, damit beim Befestigen des Außenflansches des Trägerelements an der Karosseriewandung nicht der äußere umlaufende Rand des Abdeckteils vorzeitig an der Karosseriewandung zur Anlage kommt und sich somit die Verbindung zwischen dem Trägerelement und dem Abdeckteil lösen kann. Eine wie hierbei zwischen dem äußeren umlaufenden Rand des Abdeckteils und dem Trägerelement bestehende Relativbewegung kann auch bei einem Stoß gegen das Abdeckteil oder das Trägerelement oder der Zuleitung des Trägerelements entstehen. Außerdem kann bei dieser Waschvorrichtung der Außenflansch des Trägerelements nicht von außen an der Karosseriewandung befestigt werden, weil die Düse vor dem Befestigen des Trägerelements einjustiert werden muß, und der Düsenhalter durch das Aufsetzen des Abdeckteils auf das Trägerelement erst sicher an dem Trägerelement festgesetzt ist. Deshalb kann das Trägerelement, wenn die Karosseriewandung, an welcher das Trägerelement befestigt werden muß, nicht von der Rückseite her zugänglich ist, nicht nachträglich montiert werden.

Aufgabe der Erfindung ist es, die im Oberbegriff des Anspruchs 1 beschriebene Waschvorrichtung derart zu gestalten, daß das Trägerelement, bevor auf ihn das Abdeckteil aufgesetzt ist, zusammen mit der Düse mittels von der Außenseite der Karosserie her zugänglichen Befestigungsmitteln fest und unverrückbar mit der Karosserie verbindbar ist, und daß das Trägerelement und das Abdeckteil sich nicht separat an der Karosseriewandung abstützen, damit bei einem Stoß gegen eines dieser beiden Teile sich nicht ihre Verbindung durch eine Relativbewegung zwischen ihnen ungewollt löst. Darüber hinaus soll für die zwischen dem Trägerelement und dem Abdeckteil bestehende Verbindung weder das Trägerelement noch das Abdeckteil eine durch zusätzliche verstellbare Werkzeugteile herstellbare Hinterschneidung aufweisen müssen.

Diese Aufgabe wird nach der Erfindung durch folgende Merkmale gelöst:
- der an das rohrförmige Trägerelement einstückig angeformte Außenflansch ist mit seinen Außenmaßen etwa denen angepaßt, welche an das topfförmige Abdeckteil an seinem äußeren Rand aufweist,
- das Abdeckteil stützt sich mit der Stirnfläche seines äußeren umlaufenden Randes an dem an das Tragerelement einstückig angeformten Außenflansch ab,
- der Außenflansch ist mit den Befestigungsmitteln versehen, durch welche das Trägerelement an der Karosseriewandung festsetzbar ist,
- der Düsenhalter weist außerhalb des rohrförmigen Trägerelements ein die Düse aufnehmendes separates Gehäuse auf, das an dem freien Ende des Trägerelements (2) befestigt ist und zwischen dem und dem topfförmigen Abdeckteil die formschlüssige Verbindung besteht.

Bei dieser Lösung dient das topfförmige Abdeckteil ausschließlich der Abdeckung des Abschnitts des Trägerelements, welcher zwischen der Düse und der Karosseriewandung verläuft. Bei einer vorteilhaften Lösung ist das Abdeckteil, um einen Stoß unbeschadet aufnehmen zu können, elastisch nachgiebig ausgeführt.

Weiterhin ist es vorteilhaft, wenn an der Innenseite des äußeren umlaufenden Randbereichs des topfförmigen Abdeckteils der Außenflansch zumindest abschnittsweise mit einer radial nach außen gerichteten Fläche anliegt. Hierbei ist es zweckmäßig, wenn in den Randbereich des Außenflansches des Trägerelements umlaufend eine Stufe eingebracht ist, deren Trittfläche die Anlagefläche für die Stirnfläche des äußeren umlaufenden Randes und die radial nach außen gerichtete Stoßfläche die Anlagefläche für die innere Seitenfläche des äußeren Randbereichs des Abdeckteils ist. Bei einer solchen Lösung ist das Abdeckteil an seinem äußeren umlaufenden Rand in einer bestimmten Form und Lage gehalten. In diesem Zusammenhang ist es weiterhin vorteilhaft, wenn die radial nach außen gerichtete Anlagefläche des Außenflansches sich in Richtung der Düse hin konisch verjüngt und zumindest teilweise von einer in Richtung der Düse weisenden umlaufenden Rippe des Außenflansches gebildet ist. Eine solche Anlage des Außenflansches dient beim Aufsetzen des topfförmigen Abdeckteils als Einfädelungshilfe für seinen äußeren umlaufenden Rand und ermöglicht auch dann ein leichtes und einfaches Aufsetzen des Abdeckteils auf das Trägerelement, wenn Seitenflächen des Trägerelements an seinem Randbereich durch das Erkalten des Werkstoffs nach dem Entformen radial nach innen gebogen sind. Durch die Anlagefläche sind nach dem Aufsetzen des Abdeckteils solche radial nach innen gebogenen Abschnitte des Randbereichs des Abdeckteils wieder so weit nach außen gestellt, daß sie dem Abdeckteil die gewünschte Form geben.

Vorteilhaft ist es weiterhin, wenn der Abstand zwischen der Trittfläche der Stufe und der Karosseriewandung kleiner als die übrige Wandstärke des Außenflansches ist. Dadurch erstreckt sich das Abdeckteil mit seinem äußeren umlaufenden Randbereich bis sehr nahe zur Karosseriewandung hin.

Ein weiterer Vorteil ist es, wenn die Mantelfläche des Abschnitts des rohrförmigen Trägerteils, welcher zwischen dem Außenflansch und dem Düsenhalter verläuft, mit dem Außenflansch durch radial verlaufende Versteifungsrippen verbunden ist, welche sich in Richtung der Düse konisch verjüngen. Solche Verstärkungsrippen sind ohne verstellbare Werkzeugteile herstellbar, und das Trägerelement weist eine ausreichende Festigkeit gegen Stöße auf.

Ebenfalls ist es vorteilhaft, wenn der Düsenhalter, welcher von dem die verstellbare Düse aufnehmenden Gehäuse gebildet ist, einen hohlen und zylinderförmigen Stutzen aufweist, welcher in die Durchgangsöffnung des rohrförmigen Trägerelements selbstklemmend eingeschoben ist. Bei einem solchen Düsenhalter muß das Trägerelement keine besondere Aufnahmevorrichtung für den Düsenhalter aufweisen. In diesem Zusammenhang ist es weiterhin vorteilhaft, wenn das Gehäuse des Düsenhalters das rohrförmige Trägerelement radial nach außen überragt und in die durch den überragenden Gehäuseabschnitt gebildete Hinterschneidung Rastelemente des Abdeckteils eingreifen, welche an den Randbereich der in den Boden des topfförmigen Abdeckteils eingebrachten Öffnung angeformt sind und in Aufsetzrichtung des Abdeckteils weisen. Hierbei ist es weiterhin zweckmäßig, wenn die Rastelemente in radialer Richtung federnd ausgeführte Arme sind, welche an ihren freien Enden die Rastnasen aufweisen, mit welchen sie die Hinterschneidung federnd eingreifen. Dadurch ist das Abdeckteil sehr einfach und leicht auf das Trägerelement aufsetzbar. Hierbei müssen die Maße des Abdeckteils und des Trägerelements so aufeinander abgestimmt sein, daß nach dem Eingreifen der Rastnasen in die Hinterschneidung das Abdeckteil mit der Stirnfläche seines äußeren umlaufenden Randes sich an dem Außenflansch abstützt.

Ein weiterer Vorteil ist es, wenn zwei Düsen seitlich nebeneinander angeordnet sind und die Öffnung im Boden des Abdeckteils als Längsschlitz ausgeführt ist. Auch bei einer solchen Lösung ist das Abdeckteil sehr fest mit dem Trägerelement verbindbar.

Weiterhin ist es vorteilhaft, wenn die an der Karosseriewandung anliegende Seitenfläche des Außenflansches des Trägerelements dem Oberflächenverlauf der Karosseriewandung angepaßt ist. Dadurch ist die Verbindung zwischen dem Trägerelement und der Karosseriewandung sehr stabil.

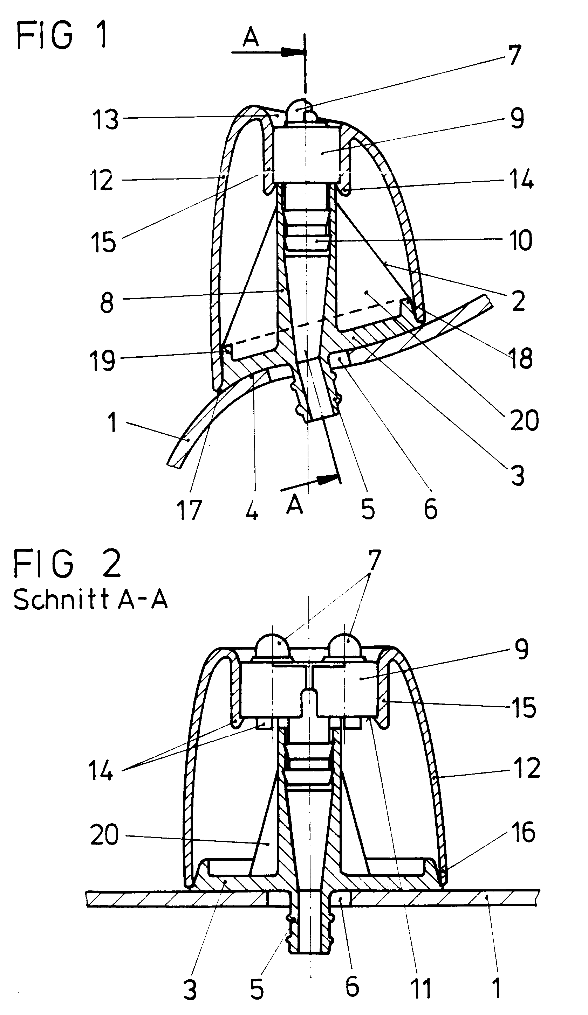

Ein Ausführungsbeispiel nach der Erfindung ist in der Zeichnung dargestellt, und zwar zeigt
- Figur 1: einen mittleren vertikalen Längsschnitt durch ein an der Karosseriewandung befestigtes Trägerelement einer Sprühdüse und einem das Trägerelement abdeckenden, topfförmigen Abdeckteil und
- Figur 2: einen Schnitt nach der Linie A-A.

An der Karosseriewandung (1) ist von der Außenseite der Karosserie her das rohrförmige Trägerlement (2) der Sprühdüse (3) befestigt. Das rohrförmige Trägerelement (2) weist den radial nach außen vorspringenden, umlaufenden Außenflansch (3) auf, dessen Seitenfläche (4) dem Oberflächenverlauf der Karosseriewandung (1) angepaßt ist und flächig an der Karosseriewandung (1) anliegt. Das Trägerelement (2) ist durch zwei Schrauben, welche durch zwei Befestigungsöffnungen des Außenflansches (3) hindurchgehen, an der Karosseriewandung (1) festgesetzt (in der Zeichnung nicht dargestellt). Der von dem Außenflansch ausgehende und zur Karosserie hin weisende Abschnitt des rohrförmigen Trägerelements (1) ist der hohl und zylinderförmig ausgeführte Stutzen (5), welcher mit der für die Reinigungsflüssigkeit dienenden Zuleitung (in der Zeichnung nicht dargestellt) verbindbar ist. Der Stutzen (5) geht durch die Öffnung (6) in der Karosseriewandung (1) hindurch. Auf der dem Stutzen (5) abgewandten Seite des Außenflansches (3) verläuft der Abschnitt (8) des rohrförmigen Trägerelements (2), in dessen Durchgangsöffnung am freien Endabschnitt der Halter (9) der Düse (7) mit dem hohl und zylinderförmig ausgeführten Stutzen (10) selbstklemmend eingeschoben ist, bis das Gehäuse des Düsenhalters (9) mit seiner Unterseite (11) an der Stirnfläche des Abschnitts (8) anliegt. In den Halter (9) sind zwei einen Abstand zueinander aufweisende Sprühdüsen eingesetzt. Auf den zwischen dem Düsenhalter (9) und der Karosseriewandung verlaufenden Abschnitt (8) des Trägerelements (2) ist das topfförmige Abdeckteil (12) mit der Bodenöffnung (13) selbstrastend aufgesetzt. Die Bodenöffnung (13) ist hülsenförmig ausgeführt und wegen der zwei nebeneinander angeordneten Sprühdüsen (7) als Längsschlitz ausgeführt. Zwischen der hülsenförmigen Öffnung (13) und dem Düsenhalter (9) besteht eine Spielpassung, damit das Abdeckteil leichtgängig auf den Düsenträger (2) aufsetzbar ist. An die zum Außenflansch (3) hin weisende Stirnfläche der hülsenförmigen Öffnung (13) sind die radial federnd ausgestalteten Arme (15) angeformt, welche mit den an ihren freien Enden angeordneten Rastnasen (14) die von der Unterseite (11) des Halters (9) gebildete Hinterschneidung eingreifen. Hierbei stützt sich das Abdeckteil (12) mit der Stirnfläche seines äußeren umlaufenden Randbereichs (16) an dem Außenflansch (3) des Trägerelementes (2) ab. In den äußeren umlaufenden Randbereich des Außenflansches (3) ist eine umlaufende Stufe eingebracht, deren Trittfläche (17) die Anlagefläche für die Stirnfläche des äußeren umlaufenden Randbereichs des Abdeckteils (12) ist und deren radial nach außen gerichtete Stoßfläche (18) die Anlagefläche für die Innenseite des äußeren umlaufenden Randbereichs (16) ist. Die Wandstärke des Außenflansches (3) im Bereich seiner Trittfläche (17) ist wesentlich kleiner als die Wandstärke in seinem übrigen Bereich. Die radial nach außen gerichtete Anlageflache (18) wird teilweise von der an den äußeren umlaufenden Randbereich des Flansches und zur Düse hin gerichteten umlaufenden Rippe (19) gebildet. Die Anlagefläche (18) verjüngt sich zur Düse hin konisch, so daß die Anlagefläche (18) und der Randbereich (16) des Abdeckteils in einem spitzen, zur Düse hin geöffneten Winkel verlaufen. An die Mantelfläche des Abschnitts (8) des rohrförmigen Trägerelements (2) sind die radial nach außen vorspringenden Versteifungsrippen (20) angeformt, welche mit dem Außenflansch (3) verbunden sind und ausgehend vom Außenflansch (3) sich mit ihrer Stirnfläche zur Sprühdüse (7) hin konisch verjüngen.

## Patentansprüche

1. Waschvorrichtung für die Lichtscheibe einer Leuchte oder eines Scheinwerfers eines Kraftfahrzeuges mit einer im Bereich der Lichtscheibe verstellbar angeordneten Düse (7), welche von einem Düsenhalter (9) am freien Ende eines rohrförmigen Trägerelements (2) getragen ist, welches mit einem einstückig angeformten Außenflansch (3) an dem Randbereich einer Karosserieöffnung (6) anlegbar ist, welches durch Befestigungsmittel an der Karosseriewandung festsetzbar ist, und welches in dem Bereich zwischen Düsenhalter (9) und der das Trägerelement (2) aufnehmbaren Karosseriewandung (1) durch ein topfförmiges Abdeckteil (12) abgedeckt ist, welches mit einer in ihn eingebrachten Bodenöffnung (13) auf das Trägerelement (2) aufgesetzt ist, mit dem Trägerelement (2) formschlüssig verbunden ist und mit seinem äußeren umlaufenden Rand (16) an die Karosseriewandung (1) angrenzt,
dadurch gekennzeichnet, daß
- der an das rohrförmige Trägerelement (2) einstückig angeformte Außenflansch (3) mit seinen Außenmaßen etwa denen angepaßt ist, welche das topfförmige Abdeckteil (12) an seinem äußeren Rand (16) aufweist,
- sich das Abdeckteil (12) mit der Stirnfläche seines äußeren umlaufenden Randes (16) an dem an das Trägerelement (2) einstückig angeformten Außenflansch (3) abstützt,
- der Außenflansch (3) mit den Befestigungsmitteln versehen ist, durch welche das Trägerelement (2) an der Karosseriewandung (1) festsetzbar ist,
- der Düsenhalter (9) außerhalb des rohrförmigen Trägerelements (2) ein die Düse (7) aufnehmendes separates Gehäuse aufweist, das an dem freien Ende des Trägerelements (2) befestigt ist und zwischen dem und dem topfförmigen Abdeckteil (12) die formschlüssige Verbindung besteht.

2. Waschvorrichtung nach Anspruch 1, dadurch gekennzeichnet, daß an der Innenseite des äußeren umlaufenden Randbereichs (16) des topfförmigen Abdeckteils (12) der Außenflansch (3) zumindest abschnittsweise mit einer radial nach außen gerichteten Fläche (18) anliegt.

3. Waschvorrichtung nach Anspruch 2, dadurch gekennzeichnet, daß in den Randbereich des Außenflansches (3) des Trägerelements (2) eine Stufe eingebracht ist, deren Trittfläche (17) die Anlagefläche für die Stirnfläche des äußeren umlaufenden Randbereichs (16) und die radial nach außen gerichtete Stoßfläche (18) die Anlagefläche für die innere Seitenfläche des äußeren Randbereichs (16) des Abdeckteils (12) ist.

4. Waschvorrichtung nach Anspruch 3, dadurch gekennzeichnet, daß die Stufe umlaufend in den äußeren Randbereich des Außenflansches (3) eingebracht ist.

5. Waschvorrichtung nach einem der Ansprüche 1 bis 4, dadurch gekennzeichnet, daß der äußere umlaufende Randbereich (16) des Abdeckteils (12) in eine in den Außenflansch (3) eingebrachte Nut eingreift.

6. Waschvorrichtung nach einem der Ansprüche 2 bis 5, dadurch gekennzeichnet, daß die radial nach außen gerichtete Anlagefläche (18) des Außenflansches (3) sich in Richtung der Düse (7) konisch verjüngt.

7. Waschvorrichtung nach einem der Ansprüche 2 bis 6, dadurch gekennzeichnet, daß die Anlagefläche (18) zumindest teilweise von einer in Richtung der Düse (7) weisenden Rippe (19) des Außenflansches (3) gebildet ist.

8. Waschvorrichtung nach Anspruch 7, dadurch gekennzeichnet, daß die Rippe (19) umlaufend an den äußeren Randbereich des Außenflansches (3) angeformt ist.

9. Waschvorrichtung nach einem der Ansprüche 1 bis 8, dadurch gekennzeichnet, daß die Mantelfläche des Abschnitts (8) des rohrförmigen Trägerelements (2), welcher zwischen dem Düsenhalter (9) und dem Außenflansch (3) verläuft, mit dem Außenflansch (3) durch radial verlaufende Versteifungsrippen (20) verbunden ist.

10. Waschvorrichtung nach einem der Ansprüche 3 bis 9, dadurch gekennzeichnet, daß die Wandstärke des Außenflansches (3)im Bereich der Trittfläche (17) der Stufe kleiner ist als die übrige Wandstärke des Außenflansches (3).

11. Waschvorrichtung nach Anspruch 9, dadurch gekennzeichnet, daß die Versteifungsrippen (20) sich in Richtung der Düse konisch verjüngen.

12. Waschvorrichtung nach einem der Ansprüche 1 bis 11, dadurch gekennzeichnet, daß der Düsenhalter (9), welcher von dem die Düse (7) aufnehmenden Gehäuse gebildet ist, einen hohlen und zylinderförmigen Stutzen (10) aufweist, welcher in die Durchgangsöffnung des rohrförmigen Trägerelements (2) selbstklemmend eingeschoben ist.

13. Waschvorrichtung nach einem der Ansprüche 1 bis 12, dadurch gekennzeichnet, daß das Gehäuse des Düsenhalters (9) den rohrförmigen Abschnitt (8) des Trägerelements (2) radial nach außen überragt und in die durch den überragenden Gehäuseabschnitt gebildete Hinterschneidung Rastelemente (14) des Abdeckteils (12) eingreifen.

14. Waschvorrichtung nach Anspruch 13, dadurch gekennzeichnet, daß die Rastelemente (14) an den Randbereich der an den Boden des topfförmigen Abdeckteils (12) eingebrachten Öffnung (13) angeformt sind und in Aufsetzrichtung des Abdeckteils (12) weisen.

15. Waschvorrichtung nach Anspruch 13 oder 14, dadurch gekennzeichnet, daß die Rastelemente (14, 15) in radialer Richtung federnd ausgeführte Arme (15) sind, welche an ihren freien Enden Rastnasen (14) aufweisen, welche in die Hinterschneidung federnd eingreifen.

16. Waschvorrichtung nach Anspruch 15, dadurch gekennzeichnet, daß die federnden Arme (15) an die in Aufsetzrichtung des Abdeckteils (12) gerichtete Stirnfläche einer hülsenförmig in den Boden des Abdeckteils (12) eingebrachten Öffnung (13) angeformt sind.

17. Waschvorrichtung nach einem der Ansprüche 1 bis 16, dadurch gekennzeichnet, daß zwischen der Öffnung (13) im Boden des Abdeckteils (12) und dem Gehäuse des Halters (9) der Düse (7) eine Spielpassung besteht.

18. Waschvorrichtung nach einem der Ansprüche 1 bis 17, dadurch gekennzeichnet, daß das Gehäuse des Halters (9) der Düse (7) zylinderförmig ausgeführt ist.

19. Waschvorrichtung nach einem der Ansprüche 1 bis 18, dadurch gekennzeichnet, daß zwei Düsen (7) seitlich nebeneinander angeordnet sind und die Öffnung (7) im Boden des Abdeckteils (12) als Längsschlitz ausgeführt ist.

20. Waschvorrichtung nach einem der Ansprüche 1 bis 19, dadurch gekennzeichnet, daß die an der Karosseriewandung (1) aufliegende Seitenfläche (4) des Außenflansches (3) des Trägerelements (2) dem Oberflächenverlauf der Karosseriewandung (1) angepaßt ist.

21. Waschvorrichtung nach einem der Ansprüche 1 bis 20, dadurch gekennzeichnet, daß das Abdeckteil (12) aus elastischem Material hergestellt ist.

## Claims

1. A washing apparatus for the cover lens of a lamp or a headlamp of a motor vehicle, having a nozzle (7) which is adjustably disposed in the region of the cover lens and which is supported by a nozzle holder (9) at the free end of a tubular support element (2), which support element can be laid on the edge region of a bodywork opening (6) by means of an external flange (3) integrally formed in one piece, can be fastened to the bodywork wall by fastening means, and is covered by a cup-shaped cover part (12) in the region between the nozzle holder (9) and the bodywork wall (1) which can receive the support element (2), which cup-shaped cover part is placed, by means of a basal opening (13) provided in it, on the support element (2), is positively connected to the support element (2), and adjoins the bodywork wall (1) at its outer encircling edge (16),
characterised in that
- the external dimensions of the external flange (3), which is integrally formed in one piece on the tubular support element (2), are approximately matched to those of the cup-shaped cover part (12) at its outer edge (16),
- the cover part (12) is supported with the end face of its outer encircling edge (16) on the external flange (3) which is integrally formed in one piece on the support element (2),
- the external flange (3) is provided with the fastening means by which the support element (2) can be fastened to the bodywork wall (1),
- the nozzle holder (9) has a separate housing which receives the nozzle (7) outside the tubular support part (2), which housing is fastened to the free end of the support element (2) and between which housing and the cup-shaped cover part (12) the positive connection exists.

2. A washing apparatus according to claim 1, characterised in that the external flange (3) is seated at least sectionally with a radially outwardly oriented face (18) against the inside of the outer encircling edge region (16) of the cup-shaped cover part (12).

3. A washing apparatus according to claim 2, characterised in that a step is provided in the edge region of the external flange (3) of the support element (2), the tread face (17) of which is the contact surface for the end face of the outer encircling edge region (16) and the radially outwardly oriented abutting surface (18) of which is the contact surface for the internal side face of the outer edge region (16) of the cover part (12).

4. A washing apparatus according to claim 3, characterised in that the step is disposed encircling in the outer edge region of the external flange (3).

5. A washing apparatus according to any one of claims 1 to 4, characterised in that the outer encircling edge region (16) of the cover part (12) engages in a groove provided in the external flange (3).

6. A washing apparatus according to any one of claims 2 to 5, characterised in that the radially outwardly oriented contact surface (18) of the external flange (3) tapers conically in the direction of the nozzle (7).

7. A washing apparatus according to any one of claims 2 to 6, characterised in that the contact surface (18) is at least partly formed by a rib (19) on the external flange (3) pointing in the direction of the nozzle (7).

8. A washing apparatus according to claim 7, characterised in that the rib (19) is integrally formed encircling on the outer edge region of the external flange (3).

9. A washing apparatus according to any one of claims 1 to 8, characterised in that the surface shell of the section (8) of the tubular support element (2), which extends between the nozzle holder (9) and the external flange (3), is attached to the external flange (3) by radially extending stiffening ribs (20).

10. A washing apparatus according to any one of claims 3 to 9, characterised in that the wall thickness of the external flange (3) in the region of the tread face (17) of the step is less than the remaining wall thickness of the external flange (3).

11. A washing apparatus according to claim 9, characterised in that the stiffening ribs (20) taper conically in the direction of the nozzle.

12. A washing apparatus according to any one of claims 1 to 11, characterised in that the nozzle holder (9), which is formed from the housing which receives the nozzle (7), comprises a hollow, cylindrical connection piece (10) which is inserted in a selflocking manner in the passageway opening of the tubular support element (2).

13. A washing apparatus according to any one of claims 1 to 12, characterised in that the housing of the nozzle holder (9) projects radially outwards beyond the tubular section (8) of the support element (2), and locking elements (14) of the cover part (12) engage in the undercut formed by the projecting housing section.

14. A washing apparatus according to claim 13, characterised in that the locking elements (14) are integrally formed at the edge region of the opening (13) provided at the base of the cup-shaped cover part (12) and point in the direction of placement of the cover part (12).

15. A washing apparatus according to claim 13 or 14, characterised in that the locking elements (14, 15) are arms (15) which are of resilient construction in the radial direction and have locking lugs (14) at their free ends which resiliently engage in the undercut.

16. A washing apparatus according to claim 15, characterised in that the resilient arms (15) are integrally formed on the end face of a sleeve-shaped opening (13) provided in the base of the cover part (12), which end face is oriented in the direction of placement of the cover part (12).

17. A washing apparatus according to any one of claims 1 to 16, characterised in that a clearance fit exists between the opening (13) in the base of the cover part (12) and the housing of the holder (9) of the nozzle (7).

18. A washing apparatus according to any one of claims 1 to 17, characterised in that the housing of the holder (9) of the nozzle (7) is of cylindrical construction.

19. A washing apparatus according to any one of claims 1 to 18, characterised in that two nozzles (7) are disposed adjacently side by side and the opening (7) in the base of the cover part (12) is constructed as a longitudinal slot.

20. A washing apparatus according to any one of claims 1 to 19, characterised in that the face (4) of the external flange (3) of the support element (2) which rests on the bodywork wall (1) is matched to the surface contour of the bodywork wall (1).

21. A washing apparatus according to any one of claims 1 to 20, characterised in that the cover part (12) is manufactured from resilient material.

## Revendications

1. Dispositif de lavage pour la plaque d'éclairement d'une lampe ou d'un phare d'un véhicule, comportant une buse (7) agencée de manière réglable dans la région de la plaque d'éclairement, qui est portée par un porte-buse (9) sur l'extrémité libre d'un élément de support (2) tubulaire qui peut être mis en place, avec une bride extérieure 3 formée d'une pièce, sur la zone de bord d'une ouverture (6) de la carrosserie, qui peut être fixé par des moyens de fixation sur la paroi de la carrosserie, et qui, dans la région située entre le porte-buse (9) et la paroi (1) de la carrosserie recevant l'élément support (2), est recouvert par un couvercle (12) en forme de pot qui est mis en place, avec une ouverture de fond (13) ménagée dans celui-ci, sur l'élément support (2), assemblé avec l'élément support (2) par coopération de forme et qui est adjacent à la paroi (1) de la carrosserie par son bord (16) périphérique extérieur,
caractérisé en ce que
- la bride extérieure (3) formée d'une seule pièce sur l'élément support (2) tubulaire est adaptée par ses dimensions extérieures approximativement à celles que présente le couvercle (12) en forme de pot sur son bord (16) extérieur,
- le couvercle (12) s'appuie avec la face frontale de son bord (16) extérieur périphérique sur la bride extérieure (3) formée d'une seule pièce sur l'élément support (2),
- la bride extérieure (3) est pourvue de moyens de fixation grâce auxquels l'élément support (2) peut être fixé sur la paroi (1) de la carrosserie,
- le porte-buse (9) présente à l'extérieur de l'élément support (2) tubulaire un boîtier séparé recevant la buse (7), qui est fixé à l'extrémité libre de l'élément support (2) et l'assemblage en coopération de forme étant réalisé entre le boîtier et le couvercle (12) en forme de pot.

2. Dispositif de lavage selon la revendication 1, caractérisé en ce que sur la face intérieure de la zone de bord (16) extérieure périphérique du couvercle (12) en forme de pot, la bride extérieure (3) est en contact au moins par tronçons sur une surface (18) orientée radialement vers l'extérieur.

3. Dispositif de lavage selon la revendication 2, caractérisé en ce que dans la zone de bord de la bride extérieure (3) de l'élément support (2) est ménagé un gradin dont la surface horizontale (17) forme la surface d'appui pour la face frontale du bord (16) extérieur périphérique et dont la face d'about (18) dirigée radialement vers l'extérieur forme la surface d'appui pour la surface latérale intérieure de la zone de bord (16) extérieure du couvercle (12).

4. Dispositif de lavage selon la revendication 3, caractérisé en ce que le gradin est ménagé sur la périphérie dans la zone de bord extérieure de la bride extérieure (3).

5. Dispositif de lavage selon l'une quelconque des revendications 1 à 4, caractérisé en ce que la zone de bord (16) extérieure périphérique du couvercle (12) s'engage dans une gorge ménagée dans la bride extérieure (3).

6. Dispositif de lavage selon l'une quelconque des revendications 2 à 5, caractérisé en ce que la surface d'appui (18) de la bride extérieure (3), qui est dirigée radialement vers l'extérieur, se rétrécit en forme de cône en direction de la buse (7).

7. Dispositif de lavage selon l'une quelconque des revendications 2 à 6, caractérisé en ce que la surface d'appui (18) est au moins partiellement formée par une nervure (19) de la bride extérieure (3) dirigée en direction de la buse (7).

8. Dispositif de lavage selon la revendication 7, caractérisé en ce que la nervure (19) est formée sur la périphérie de la zone de bord extérieure de la bride extérieure (3).

9. Dispositif de lavage selon l'une quelconque des revendications 1 à 8, caractérisé en ce que la surface d'enveloppe du tronçon (8) de l'élément support (2) tubulaire qui s'étend entre le porte-buse et la bride extérieure, est reliée à la bride extérieure (3) par des nervures (20) de renforcement radiales.

10. Dispositif de lavage selon l'une quelconque des revendications 3 à 9, caractérisé en ce que l'épaisseur de paroi de la bride extérieure (3) dans la région de la surface horizontale (17) du gradin est inférieure au reste de l'épaisseur de paroi de la bride extérieure (3).

11. Dispositif de lavage selon la revendication 9, caractérisé en ce que les nervures (20) de renforcement se rétrécissent en forme de cône en direction de la buse.

12. Dispositif de lavage selon l'une quelconque des revendications 1 à 11, caractérisé en ce que le porte-buse (9), qui est formé par le boîtier recevant la buse (7), présente un manchon (10) creux et de forme cylindrique qui est enfiché en auto-coincement dans l'ouverture de passage de l'élément support (2) tubulaire.

13. Dispositif de lavage selon l'une quelconque des revendications 1 à 12, caractérisé en ce que le boîtier du porte-buse (9) dépasse radialement le tronçon tubulaire (8) de l'élément support (2) vers l'extérieur et en ce que des éléments d'encliquetage (14) du couvercle (12) s'engagent dans la contre-découpe formée par le tronçon du boîtier en saillie.

14. Dispositif de lavage selon la revendication 13 , caractérisé en ce que les éléments d'encliquetage (14) sont formés sur la zone de bord de l'ouverture (13) ménagée dans le fond du couvercle (12) en forme de pot et dirigée en direction de mise en place du couvercle (12).

15. Dispositif de lavage selon l'une quelconque des revendications 13 ou 14, caractérisé en ce que les éléments d'encliquetage (14, 15) sont des bras (15) réalisés élastiques en direction radiale, qui présentent à leurs extrémités libres des tenons d'encliquetage (14) avec lesquels ils s'engagent de manière élastique dans la contre-découpe.

16. Dispositif de lavage selon la revendication 15, caractérisé en ce que les bras (15) élastiques sont formés sur la face frontale d'une ouverture (13) ménagée en forme de douille dans le fond du couvercle (12) en direction de mise en place du couvercle (12).

17. Dispositif de lavage selon l'une quelconque des revendications 1 à 16, caractérisé en ce qu'un ajustement avec jeu se trouve entre l'ouverture (13) dans le fond du couvercle (12) et le boîtier du porte-buse (9) de la buse (7).

18. Dispositif de lavage selon l'une quelconque des revendications 1 à 17, caractérisé en ce que le boîtier du porte-buse (9) de la buse (7) est réalisé de forme cylindrique.

19. Dispositif de lavage selon l'une quelconque des revendications 1 à 18, caractérisé en ce que deux buses (7) sont agencées latéralement l'une à côté de l'autre et en ce que l'ouverture (13) dans le fond du couvercle (12) est réalisée sous forme de fente oblongue.

20. Dispositif de lavage selon l'une quelconque des revendications 1 à 19, caractérisé en ce que la face latérale (4) de la bride extérieure (3) de l'élément support (2), qui est en appui sur la paroi (1) de la carrosserie, est ajustée au contour de la surface de la paroi (1) de carrosserie.

21. Dispositif de lavage selon l'une quelconque des revendications 1 à 20, caractérisé en ce que le couvercle (12) est fabriqué en un matériau élastique.
